# EUROPEAN PATENT APPLICATION

(11) **EP 4 092 383 A1**
(43) Date of publication of application: **23.11.2022**
(21) Application number: 22174374.3
(22) Date of filing: 19.05.2022
(51) Int. Cl.: G01C 21/00

(54) **CUSTOMIZED DIGITAL MAP GENERATION**

(30) Priority: 19.05.2021 US 202163190639 P
(71) Applicant: NextBillion.ai Pte. Ltd., Uob Plaza 048624 (SG)
(72) Inventor: BUBNA, Gaurav, 085101 - (SG); ZHENG, Shaolin, Beijing (CN); LIU, Kai, Beijing (CN); FU, Yao, Chengguan Town (CN); BULUSU, Ajay, 018978 - (SG)
(74) Representative: Papula Oy

(57) **Abstract**

Provided is a system for generation of a customized digital map. The system includes an application server that collects one or more reference transportation routes and regulations associated with a geographical area and one or more current transportation routes and activities being implemented in the geographical area. The application server detects one or more conflicts among a digital map of the geographical area, the one or more reference transportation routes and regulations, and the one or more current transportation routes and activities and executes a conflict resolution routine that resolves the one or more conflicts. The application server further generates conflict resolved data based on an output of the conflict resolution routine and updates the digital map of the geographical area to reflect the conflict resolved data based on presence of at least one difference between the digital map and the conflict resolved data.

## Description

### FIELD

Various embodiments of the disclosure relate generally to digital maps. More specifically, various embodiments of the disclosure relate to methods and systems for generating customized digital maps.

### BACKGROUND

Digital maps have become a part and parcel of today's day to day lives for fulfilling navigation requirements. Generally, a user tends to use open-source maps to navigate between a source and a destination. Such open-source maps are freely available over public platforms, and tend to be generic and editable in nature. However, use of the open-source maps for navigation comes with its own challenges.

Since the open-source maps are generic in nature, they do not cater to specific navigation requirements of users. For example, an open-source map may be used by a food delivery person having received an order to deliver a food package to a residential apartment within a housing society. The housing society may have three gates A, B, and C, such that the gate A is assigned to resident vehicles only, gate B is for exit only, and gate C is for entry. Due to its generic nature, the open-source map may not reflect gate assignment rules of the housing society. Thus, based on inadequate navigation data presented by the open-source map, the food delivery person may reach an incorrect gate for entering the society, resulting in time and resource wastage. In another example, a driver of a heavy-duty vehicle may be required to travel via a city A, which only allows heavy-duty vehicles inside between 10:00 PM to 6:00 AM. Such travel guidelines of the city A for heavy-duty vehicles may not be captured by the generic open-source map, and hence the driver may end up entering the city A at 1:00 PM by following the open-source map. In addition, the open-source maps may sometimes include outdated data or incorrect data due to edit by some malicious entities, which is undesirable. Thus, there exists a need for a technical and reliable solution that overcomes the abovementioned problems.

Limitations and disadvantages of conventional and traditional approaches will become apparent to one of skill in the art, through comparison of described systems with some aspects of the present disclosure, as set forth in the remainder of the present application and with reference to the drawings.

### SUMMARY

Systems and Methods for generation of customized digital maps are provided substantially as shown in, and described in connection with, at least one of the figures, as set forth in the claims.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

FIG. 1 is a block diagram that illustrates a system environment for generating a customized digital map, in accordance with an exemplary embodiment of the disclosure;
FIG. 2 is a block diagram of an application server, in accordance with an exemplary embodiment of the disclosure;
FIG. 3 is a diagram that illustrates an exemplary scenario for generating the customized digital map, in accordance with an exemplary embodiment of the disclosure;
FIG. 4 is a block diagram that illustrates a system architecture of a computer system for generating the customized digital map, in accordance with an exemplary embodiment of the disclosure;
FIG. 5 is a flow chart that illustrates a method for generating the customized digital map, in accordance with an exemplary embodiment of the disclosure; and
FIGS. 6A and 6B are flow charts that, collectively, illustrate a method for generating the customized digital map, in accordance with an exemplary embodiment of the disclosure.

### DETAILED DESCRIPTION

Certain embodiments of the disclosure may be found in the disclosed systems and methods for generating customized digital maps. Exemplary aspects of the disclosure provide systems for generating customized digital maps. The system includes an application server that may be configured to execute various operations to generate a customized digital map. In an embodiment, the application server may be configured to collect one or more reference transportation routes and regulations associated with a geographical area from one or more databases. The application server may be further configured to acquire one or more current transportation routes and activities being implemented in the geographical area from a set of data sources. The application server may be further configured to detect, one or more conflicts among a digital map of the geographical area, the one or more reference transportation routes and regulations, and the one or more current transportation routes and activities. The one or more conflicts are indicative of at least one contradiction among at least two of the digital map, the one or more reference transportation routes and regulations, and the one or more current transportation routes and activities. The application server may be further configured to execute a conflict resolution routine that processes the digital map, the one or more reference transportation routes and regulations, and the one or more current transportation routes and activities to resolve the one or more conflicts. The application server may be further configured to generate conflict resolved data based on an output of the conflict resolution routine. The application server may be further configured to update the digital map of the geographical area to reflect the conflict resolved data based on presence of at least one difference between the digital map and the conflict resolved data.

In some embodiments, the application server may be further configured to receive a customized map request, via a user device associated with an entity, for generation of the customized digital map of the geographical area. The application server may be further configured to acquire, based on the customized map request, the digital map of the geographical area from at least one of the one or more databases.

In some embodiments, the application server may be further configured to receive a set of customization parameters via the user device. Each customization parameter of the set of customization parameters corresponds to one or more custom map rules to be adhered to in the customized digital map.

In some embodiments, the conflict resolution routine resolves the one or more conflicts based on one of: (i) a priority allocated to: the digital map, the one or more reference transportation routes and regulations, and the one or more current transportation routes and activities and (ii) a recency factor of: the digital map, the one or more reference transportation routes and regulations, and the one or more current transportation routes and activities.

In some embodiments, the application server may be further configured to execute a quality assurance routine on the customized digital map to ensure incorporation of one or more quality assurance constraints in the customized digital map.

In some embodiments, the conflict resolved data includes the set of customization parameters and one or more deviation factors among the digital map, the one or more reference transportation routes and regulations, and the one or more current transportation routes and activities.

In some embodiments, the application server may be further configured to merge the conflict resolved data with the digital map to update the digital map.

In some embodiments, the application server may be configured to communicate a first warning notification with respect to at least one conflict of the one or more conflicts that remains unresolved after execution of the conflict resolution routine to a user device associated with an administrator of the system. The application server may be further configured to receive a first user input via the user device for resolution of the at least one conflict of the one or more conflicts. The application server may be further configured to resolve the at least one conflict of the one or more conflicts based on the received first user input.

In some embodiments, the application server may be further configured to update the conflict resolution routine based on the resolution of the at least one conflict of the one or more conflicts in accordance with the received first user input.

In some embodiments, the application server may be further configured to detect, based on the execution of the quality assurance routine, one or more quality issues associated with the customized digital map. The application server may be further configured to communicate a second warning notification based on the detected one or more quality issues to the user device associated with the administrator of the system.

In some embodiments, the application server may be further configured to receive a second user input via the user device for resolution of the one or more quality issues.

In some embodiments, the application server may be further configured to update the quality assurance routine based on the resolution of the one or more quality issues in accordance with the received second user input.

In some embodiments, the one or more databases include at least one of one or more government databases and one or more open-source navigation map sources, for the geographical area.

In some embodiments, the set of data sources include at least one of street view maps of the geographical area, one or more sensors deployed in the geographical area, and one or more vehicles travelling via the geographical area.

The methods and systems of the disclosure provide a solution for generating customized digital maps. Such customized digital maps are generated in a way to cater to specific navigation requirements of user entities. The customized digital maps provide the user entities with customized navigation data that optimizes travel time and distance for the user entities. The methods and systems disclosed herein allow the user entities to have a better understanding and control over navigation of their resources. The disclosed methods and systems also allow for optimization of time, cost, and effort required for commuting and navigating within a geographical area. The disclosed methods and systems allow for a simple and trustable solution for acquiring navigation data.

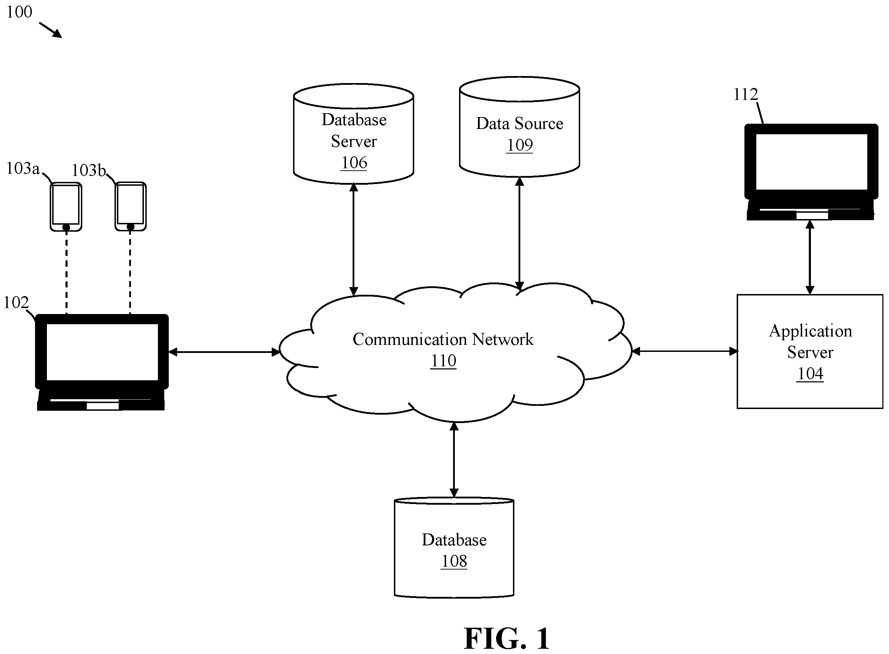

FIG. 1 is a block diagram that illustrates an exemplary system environment for generating a customized digital map, in accordance with an exemplary embodiment of the disclosure. Referring to FIG. 1, a system environment 100 is shown that includes a primary user device 102, an application server 104, a database server 106, one or more databases (for example, a database 108), a set of data sources (for example, a data source 109), and a communication network 110. In one embodiment, the primary user device 102 may be associated with first and second user devices 103a and 103b. The primary user device 102 may be communicatively coupled to the application server 104 via the communication network 110. The application server 104 may be communicatively coupled to the database server 106, the one or more databases, and the set of data sources via the communication network 110.

Examples of the communication network 110 may include, but are not limited to, a wireless fidelity (Wi-Fi) network, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, and a combination thereof. Examples of the communication network 110 may further include a Narrow Band-Internet of Things (NB-IoT) network, a 5G network, a 4G network, a long range (LoRa) wireless technology network, a ZigBee network, an IPv6 Low-power wireless Personal Area Network (6LowPAN), or the like. Various entities (such as the primary user device 102, the application server 104, the database server 106, and the one or more databases, and the set of data sources in the system environment 100 may be coupled to the communication network 110 in accordance with various wired and wireless communication protocols, such as Transmission Control Protocol and Internet Protocol (TCP/IP), User Datagram Protocol (UDP), Long Term Evolution (LTE) communication protocols, or any combination thereof.

The primary user device 102 may include suitable logic, circuitry, interfaces, and/or code, executable by the circuitry, that may be configured to perform one or more operations for interacting with the application server 104 and the database server 106 to access the customized digital map generated by the application server 104. The primary user device 102 may be associated with an entity (not shown). The term "entity" is interchangeably used with the term "user entity" throughout the ongoing description. In an embodiment, the primary user device 102 may be exclusive to the user entity. In another embodiment, the primary user device 102 may be shared among a plurality of user entities. The primary user device 102 may be used by the user entity to communicate a customized map request to the application server 104 and access the customized digital map generated by the application server 104 in response to the customized map request.

The user entity may refer to an individual or an organization that requires navigation within a geographical region. The user entity may have specific navigation requirements. Hence, the user entity may require a digital map that has been customized to fulfill the specific requirements.

In an embodiment where the user entity may be an individual, the primary user device 102 may be a personal device of the user entity. The primary user device 102 may be utilized by the user entity to access the customized digital map in order to navigate within the geographical region. Further, the first and second user devices 103a and 103b may be other personal devices of the user entity.

In another embodiment, the user entity may be an organization that requires navigation information for its operation. In such embodiment, the primary user device 102 may be a server or a shared device of the organization that is communicatively coupled with additional user devices (for example, the first and second user devices 103a and 103b). The primary user device 102 may be configured to access data (for example, GPS data) associated with the additional user devices. The additional user devices may be associated with employees, support staff, other personnel, or on ground vehicles of the organization that are required to access the customized digital map for their operations.

In one example, the user entity may be a transportation service agency. In such an example, the primary user device 102 may be a server of the transportation service platform being managed by the transportation service agency. The primary user device 102 may be configured to communicate the customized map request to the application server 104 and receive the customized digital map generated by the application server 104. The first and second user devices 103a and 103b may be associated with first and second vehicles or vehicle drivers deployed by the transportation service agency. The customized digital map may be accessed by the first and second vehicle drivers via the first and second user devices 103a and 103b for their operations.

In another example, the user entity may be a food delivery service provider. In such an example, the primary user device 102 may be a server of the food delivery service provider. The primary user device 102 may be used by the food delivery service provider to communicate the customized map request to the application server 104. The primary user device 102 of the food delivery service provider may be associated with one or more other devices (e.g., the first and second user devices 103a and 103b) of one or more food delivery personnel. The customized digital map received by the primary user device 102 and may also be accessed via the other devices associated therewith.

The customized digital map may refer to a digital map that has been generated in accordance with the specific navigation requirements of a user entity. The customized digital map presents navigation information that is specific to the user entity. The customized digital map is free of conflicts and is verified to present correct information. The customized digital map is generated for the geographical region that is relevant to the user entity.

The primary user device 102 may run or execute an application program interface (API) of the application server 104. For example, the primary user device 102 may be configured to run a mobile application or a web application hosted by the application server 104. The primary user device 102 may be configured to present a graphical user interface (GUI) of the API to the user entity through which a user query pertaining to the customized map request may be submitted. The user query may include keyword(s) defining or describing a geographical region for which the customized digital map is to be obtained by the user entity. The keyword(s) may refer to a landmark, a building, geographical coordinates, a locality, a city, or the like. The primary user device 102 may be configured to generate and communicate the customized map request to the application server 104 based on the user query submitted via the presented GUI. In an embodiment, the user query may be a textual input. In another embodiment, the user query may be submitted in form of speech data (*i.e.,* audio data) including keywords (for example, a coordinate, a landmark, or the like) uttered by the user entity. The primary user device 102 may be configured to present the customized digital map to the user entity via the GUI. Examples of the primary user device 102, and the first and second user devices 103a and 103b may include a cell-phone, a laptop, a tablet, a phablet, a desktop, a computer, or the like.

In an embodiment, different user devices (for example, the primary user device 102, the first and second user devices 103a and 103b, or any other user device) may have different operating systems. The GUI displayed via the respective user device for presenting the customized digital map may be in conformity with respective operating system and display screen resolution of different user devices.

For the sake of brevity, the ongoing description is described from perspective of the primary user device 102. However, in other embodiments, the customized map request may be provided, and the customized digital map may be accessed via other user devices (e.g., the first and second user devices 103a and 103b) associated with the user entity.

The application server 104 may include suitable logic, circuitry, interfaces, and/or code, executable by the circuitry, that may be configured to perform one or more operations for generating the customized digital map. The application server 104 may generate the customized digital map that takes various aspects, such as a physical layout, traffic regulations, weather, and the like, of the geographical region into consideration. The application server 104 may be a cloud-based server or a local processor. Examples of the application server 104 may include, but are not limited to, personal computers, laptops, mini-computers, mainframe computers, any non-transient and tangible machine that can execute a machine-readable code, cloud-based servers, distributed server networks, or a network of computer systems. The application server 104 may be realized through various web-based technologies such as, but not limited to, a Java web-framework, a .NET framework, a personal home page (PHP) framework, NodeJS framework, Go Framework, or any other web-application framework.

The database server 106 may include suitable logic, circuitry, interfaces, and/or code, executable by the circuitry, that may be configured to perform one or more operations for storing data required for generation of the customized digital map. Examples of the database server 106 may include a cloud-based database, a local database, a distributed database, a database management system (DBMS), or the like. The database server 106 may be used as data storage for storing temporary data and the customized digital map. In an embodiment, the database server 106 may be a component of the application server 104.

In operation, the application server 104 may be configured to receive and analyze the customized map request. The customized map request may include the geographical region for which the customized digital map is to be generated. In an example, the geographical region may refer to a city, a town, a state, or the like. The customized map request may further include one or more instructions for personalizing the customized digital map. The application server 104 may determine the geographical region based on the analysis of the customized map request. Subsequently, the application server 104 may be configured to acquire, based on the received customized map request, a digital map of the geographical region. The digital map may be an open-source map (OSM) available over at least one of the one or more databases (for example, the database 108). Examples of the OSM may include OpenStreetMap^{®}, Google Map^{®}, MapQuest^{®}, or the like. The one or more databases may include at least one of one or more government databases and one or more open-source navigation map sources for the geographical area. The one or more databases may be reliable sources that include correct and up to date map of the geographical area. The one or more databases may be accessed by way of an authorization or may be freely available. The application server 104 may acquire the digital map from the one or more databases by way of the communication network 110. The application server 104 may store the acquired digital map in the database server 106. The application server 104 may be further configured to store other temporary data required for generating the customized digital map in the database server 106.

The application server 104 may be further configured to collect one or more reference transportation routes and regulations associated with the geographical area from the one or more databases. The reference transportation routes and regulations refer to authorized paths, roads, diversions, traffic rules, passage rules, permissions, or the like that are kept in place by an authority of the geographical area to facilitate transportation within the geographical area. The reference transportation routes and regulations may be authorized and permitted modes, routes, and permissions associated with the geographical area.

The application server 104 may be further configured to acquire on-ground data associated with the geographical region from the set of data sources (for example, the data source 109). The set of data sources may include at least one of street view maps of the geographical area, one or more sensors deployed in the geographical area, and one or more vehicles travelling via the geographical area. The street view maps of the geographical area may be indicative of active or inactive states of routes within the geographical area. The one or more sensors deployed in the geographical area may be indicative of a current status of different factors (for example, weather, traffic, construction work, or the like) affecting the routes within the geographical area. The one or more vehicles travelling via the geographical area may be communicatively coupled to the application server 104 (for example, by way of corresponding telematic device) and may communicate information associated with current traffic status, diversions, permissions, or the like associated with routes within the geographical area.

The on-ground data may include one or more current transportation routes and activities being implemented in the geographical area. The one or more current transportation routes and activities may refer to an existing state of transportation routes and regulations within the geographical area. For example, the on-ground data may include GPS data collected from the one or more vehicles travelling in the geographical area, traffic conditions, satellite imagery, street map imagery indicative of weather, geographical layout, and road network of the geographical region. In one example, the on-ground data may be indicative of intersections, one-way/two-way/freeway roads, and footpaths as per the regular activities of the one or more vehicles or individuals travelling within the geographical regions. The on-ground data may be dynamic in nature. The on-ground data may change with respect to time and environmental conditions. The on-ground data may vary for different geographical regions.

In some embodiments, the one or more reference routes and regulations for the geographical area may be same as the one or more current routes and activities being implemented in the geographical area. In some embodiments, the one or more reference routes and regulations for the geographical area may be different from the one or more current routes and activities being implemented in the geographical area. In such embodiments, the difference between the reference routes and regulations and the current routes and activities may include a diversion, restricted permissions, a new dead-end, or the like. The difference between the reference routes and regulations and the current routes and activities may be due to an on-going event within the geographical area. The on-going event may include an on-going construction work, a procession, an accident, traffic condition, natural disruptions (for example, rain, storm, etc.), or the like which is not captured or updated in the one or more reference routes and regulations.

The application server 104 may be further configured to receive a set of customization parameters from the primary user device 102. The set of customization parameters may include one or more custom map rules that should be adhered to while generating the customized digital map. The set of customization parameters may vary based on a domain associated with the user entity. In one example, the user entity may belong to a transportation service. In such an example, the set of customization parameters may include one or more custom map rules such as excluding footpaths and underground lanes. In another example, the user entity may belong to a food delivery service. In such an example, the set of customization parameters may include one or more custom map rules such as including streets and footpaths, one or more restaurants, excluding one or more routes for heavy duty vehicles, or the like. In another example, the set of customization parameters may include use of distinct symbols to display apartments, villas, row houses, slums, or the like. In another example, the set of customization parameters may include one or more custom map rules such as indicating a count of levels of multi-story buildings. In some embodiments, the set of customization parameters may further include aesthetic rules to be adhered in customized digital map. Examples of the aesthetic rules may include, but are not limited to, no overlapping between roads and buildings, distinct depiction of high-rise buildings and villas, or the like.

It will be apparent to a person of ordinary skill that the abovementioned set of customization parameters are described for exemplary purposes and should not construed to limit the scope of the disclosure. In other words, the set of customization parameters may include any entity specific parameters based on which the digital map is to be customized. The application server 104 may be further configured to store the on-ground data and the set of customization parameters in the database server 106.

In some embodiments, the on-ground data may be raw and is required to be processed to acquire the one or more current routes and activities (also referred to as "intelligence"). In such embodiments, the on-ground data may be processed to generate the intelligence. The term "intelligence" may be used interchangeably with the term "one or more current routes and activities" in the ongoing description and in drawings. In some embodiments, the intelligence may be generated by the application server 104 based on processing of the on-ground data and the digital map. In some embodiments, the on-ground data may be processed by the application server 104 in conformity with the set of customization parameters to generate the intelligence. The intelligence may refer to information and insights, obtained or deduced from the on-ground data, that is relevant for generating the customized digital map. The application server 104 may be configured to identify a pattern in the on-ground data in order to generate the intelligence. In one embodiment, the intelligence may be acquired and deduced from the on-ground data based on one or more artificial intelligence (AI) techniques. In one example, the on-ground data may include a route between first and second locations. However, the application server 104 may observe in the on-ground data that the route is not being used by people to commute between the first and second locations. Therefore, the application server 104 may deduce an intelligence that the route between the first and second locations might be broken, blocked, or under construction. In another example, the on-ground data may indicate that a first route is not being taken by heavy-duty vehicles during 6:00 AM to 10:00 PM. Therefore, the application server 104 may generate an intelligence that indicates that heavy-duty vehicles are allowed on the first route only between 10:00 PM to 6:00 AM. In another example, the on-ground data may indicate that on a second route, traffic is moving in only one direction. Therefore, the application server 104 may generate an intelligence indicating that the second route is one-way. In another example, the on-ground data may indicate that a plurality of vehicles commute between first and second locations using a route that is not marked on the digital map. Therefore, the application server 104 may generate an intelligence regarding the existence of a new viable route that connects the first and second locations. It will be apparent to a person of ordinary skill in the art that the abovementioned examples of the intelligence (e.g., the one or more current routes and activities) are merely for the sake of illustration and should not be construed limiting to the scope of the disclosure.

The application server 104 may be further configured to determine one or more conflicts among the digital map, the one or more reference transportation routes and regulations, and the one or more current transportation routes and activities (e.g., the intelligence acquired from the on-ground data). The one or more conflicts may be indicative of at least one mismatch or contradiction among at least two of the digital map, the one or more reference routes and regulations, and the one or more current routes and activities.

In a first example, the one or more reference routes and regulations may include presence of an active highway in a first portion of the geographical area. The one or more current routes and activities may include presence of a blocked highway and a diversion in the first portion of the geographical area due to an on-going construction activity in the first portion. Therefore, the one or more reference routes and regulations and the one or more current routes and activities may have a contradiction regarding the highway in the first portion being either blocked or active.

In a second example, the digital map may be indicative of presence of lake in a second portion of the geographical area. The one or more reference routes and regulations may be indicative of presence of a dumping yard in the second portion of the geographical area. Therefore, the digital map and the one or more reference routes and regulations may have a contradiction regarding presence of either the lake or the dumping yard in the second portion of the geographical area.

In some embodiments, the application server 104 may be further configured to determine whether there is any conflict among the intelligence, the customization parameters, the digital map, and the on-ground data. In one embodiment, there may be a conflict in case the customization parameters and the intelligence do not conform to each other. In another embodiment, there may be a conflict in case the intelligence does not match the on-ground data.

The application server 104 may be configured to execute a conflict resolution routine that processes the digital map, the one or more reference transportation routes and regulations, and the one or more current transportation routes and activities to resolve the one or more conflicts. The conflict resolution routine may include one or more conflict resolution techniques for resolution of the one or more conflicts. The conflict resolution routine may resolve the one or more conflicts based on one of (i) a priority allocated to: the digital map, the one or more reference transportation routes and regulations, and the one or more current transportation routes and activities and (ii) a recency factor of: the digital map, the one or more reference transportation routes and regulations, and the one or more current transportation routes and activities.

The priority allocated to the digital map, the one or more reference transportation routes and regulations, and the one or more current transportation routes and activities may refer to a preference among the digital map, the one or more reference transportation routes and regulations, and the one or more current transportation routes and activities over other to resolve the one or more conflicts. For example, the one or more current transportation routes and activities may have higher priority than the digital map. In such a scenario, if there exists a conflict between the one or more current transportation routes and activities and the digital map, information included in the one or more current transportation routes and activities may be used for resolving the conflict. Referring to the first example, the one or more reference routes and regulations may have a priority that may be lower than a priority of the one or more current routes and activities. Therefore, the conflict between the one or more reference routes and regulations and the one or more current routes and activities may be resolved based on the priority of the one or more current routes and activities being higher than the one or more reference routes and regulations. Therefore, the conflict between the one or more current routes and activities may be resolved by overriding the one or more reference routes and regulations by the one or more current routes and activities.

The recency factor of the digital map, the one or more reference transportation routes and regulations, and the one or more current transportation routes and activities may be indicative a recency (or newness) associated with the digital map, the one or more reference transportation routes and regulations, and the one or more current transportation routes. A recency factor that is indicative of one of the digital map, the one or more reference transportation routes and regulations, and the one or more current transportation routes being most recent may be preferred over others for resolving conflicts. Referring to the second example, the digital map may have a recency factor "2" and the one or more reference routes and regulations may have a recency factor "1". The recency factor "1" may be indicative of the one or more reference routes and regulations being more recent than the digital map having the recency factor "2". Hence, the conflict between the digital map and the one or more reference routes and regulations may be resolved by overriding the digital map with the one or more reference routes and regulations.

In some embodiments, the application server 104 may be further configured to apply the one or more conflict resolution techniques for resolving one or more conflicts among the intelligence (e.g., the one or more current transportation routes and activities), the on-ground data, the digital map, the one or more reference transportation routes and regulations and the set of customization parameters.

In some embodiments, the application server 104 may be further configured to present at least one conflict of the one or more conflicts, that requires human intervention to get resolved, to an administrator (for example, a conflict manager) of the system via a graphic user interface (GUI) of the application server 104. The administrator of the system may be an individual associated with the application server 104 and responsible to facilitate generation of the customized digital map. The at least one conflict may have remained unresolved after execution of the conflict resolution routine. The application server 104 may be configured to communicate a first warning notification to a user device (for example, a user device 112) of the administrator of the system. Such conflicts may be resolved based on a first user input received from the conflict manager via the GUI (for example, a GUI of the user device 112). Upon manual resolution of the conflicts, the application server 104 may be further configured to analyze the intelligence (e.g., the one or more current transportation routes and activities), the on-ground data, the digital map, the one or more reference transportation routes and regulations and the set of customization parameters to check whether there is any other conflict that requires to be resolved. The conflict manager may be an individual accountable to ensure zero conflicts among the intelligence (e.g., the one or more current transportation routes and activities), the on-ground data, the digital map, the one or more reference transportation routes and regulations and the set of customization parameters.

Based on resolution of the at least one conflict in accordance with the first user input, the application server 104 may update the conflict resolution routine to learn resolving such conflicts. For example, the first user input may be indicative of correlating the one or more reference routes and regulations and the one or more current routes and activities with the digital map to resolve a conflict between the one or more reference routes and regulations and the one or more current routes and activities. Therefore, the application server 104 may update the conflict resolution routine to correlate the one or more reference routes and regulations and the one or more current routes and activities with the digital map when the conflict may not get resolved based on the priority and/or the recency factor associated with the one or more reference routes and regulations and the one or more current routes and activities. In an exemplary scenario, the one or more reference routes and regulations may have dedicated a first route between two locations in the geographical area as a one-way path. However, as per the one or more current routes and activities acquired, 2 out of 10 vehicles on the first route are found to be travelling in an opposite direction of the one-way path. In such a scenario, the first user input may indicate that the two vehicles that are travelling in the opposite direction are merely violating the traffic rules, and hence may override the one or more current routes and activities with the one or more reference routes and regulations to resolve the conflict.

Upon resolving the one or more conflicts, the application server 104 may be further configured to generate conflict resolved data. The conflict resolved data may include the set of customization parameters and one or more deviation factors among the digital map, the one or more reference transportation routes and regulations, and the current transportation routes and activities. The one or more deviation factors may include one or more differences among the digital map, the one or more reference transportation routes and regulations, and the current transportation routes and activities that are conflict resolved. That is to say, the one or more deviations among the digital map, the one or more reference transportation routes and regulations, and the current transportation routes and activities are the existing routes and activities that are being implemented in the geographical area.

The application server 104 may be further configured to update the digital map of the geographical area to reflect the conflict resolved data based on presence of at least one difference between the digital map and the conflict resolved data. The application server 104 may update the digital map in instances when it does not reflect the set of customization parameters and/or the one or more deviation factors. The application server 104 may update the digital map by making modifications therein to reflect the set of customization parameters and/or the one or more deviation factors.

In some embodiments, the conflict resolved data includes the on-ground data, the digital map, the intelligence, and the set of customization parameters having no conflict therebetween. In other words, after resolving all the conflicts, the application server 104 may modify the digital map to reflect the intelligence and the customization parameters to generate an intermediate digital map. For example, the application server 104 may update the digital map by merging the conflict resolved data with the digital map. The application server 104 may be further configured to merge the conflict resolved data with the digital map to generate the customized digital map in accordance with one or more merge policies. The conflict resolved data may be merged with the digital map so that the digital map reflects the one or more deviation factors and the set of customization parameters. The one or more merge policies may include at least one constraint to be followed while merging the conflict resolved data and the digital map. In an example, the one or more merge policies may include constraints such as (i) a sequential incorporation of the deviation factors and the set of customization parameters in the digital map (ii) incorporation of the deviation factors and the set of customization parameters in separate copies of the digital map and subsequently combining the different copies to generate the customized digital map, or the like.

The application server 104 may be further configured to execute a quality assurance routine on the customized digital map to ensure incorporation of one or more quality assurance (QA) constraints in the customized digital map. The QA constraints may refer to one or more constraints that are adhered to in order to maintain a quality of the customized digital map, *i.e.,* to prevent ambiguity in the customized digital map. For example, a QA constraint may indicate that no parallel roads should intersect with each other. In another example, a QA constraint may indicate that a building must not overlap with another building(s) or a road(s). In another example, a QA constraint may indicate that a bridge and a road should be indicated differently. In another example, a QA constraint may indicate that no water bodies should overlap a road. It will be apparent to a person of ordinary skill in the art that the abovementioned examples of the QA constraints are merely for the sake of illustration and should not be construed limiting to the scope of the disclosure. In some embodiments, the application server 104 may be further configured to apply one or more quality assurance (QA) constraints on the intermediate digital map to generate the customized digital map.

The application server 104 may be further configured to detect, based on the execution of the quality assurance routine, one or more quality issues (for example, QA errors) associated with the intermediate digital map or the customized digital map. When there are one or more QA errors in the intermediate digital map or the customized digital map, the application server 104 may be configured to raise warning and errors regarding the one or more QA errors. In some embodiments, the application server 104 may be further configured to resolve the one or more QA errors by modifying the intermediate digital map or the customized digital maps. In some embodiments, the one or more QA errors that require human intervention are resolved by communicating, by the application server 104, a second warning notification to the user device 112 of the administrator of the system. The application server 104 may be further configured to receive, in response to the second warning notification, a second user input from the administrator (for example, a quality manager) via the user device 112 of the administrator for resolving the one or more QA errors. The quality manager may be an individual accountable to ensure an optimal quality of the customized digital map. In an embodiment, the conflict manager and the quality manager may be the same. In another embodiment, the conflict manager and the quality manager may be different individuals. The application server 104 may be further configured to generate a quality assured customized digital map based on resolution of the one or more QA errors present in the intermediate digital map or the customized digital map. The quality assured customized digital map having no QA errors is interchangeably referred to as "the customized digital map" or "the quality assured map".

In some embodiments, when the second user input is received for resolution of the one or more QA errors, the application server 104 may be configured to update the quality assurance routine. The application server 104 may be configured to update the quality assurance routine based on the resolution of the one or more QA errors in accordance with the received second user input. The application server 104 may update the quality assurance routine to incorporate the second user input. The second user input may be indicative of a constraint to be adhered to resolve the QA errors for which the second warning notification had been communicated. In an example, a QA error may indicate illustration of highways and service lanes, in the customized digital map, to be identical. In such an example, the second user input may be indicative of illustrating highways with solid lines and service lanes with dashed lines. Therefore, the application server 104 may be configured to update the quality assurance routine to include a constraint for depicting the highways with solid lines and the service lanes with dashed lines.

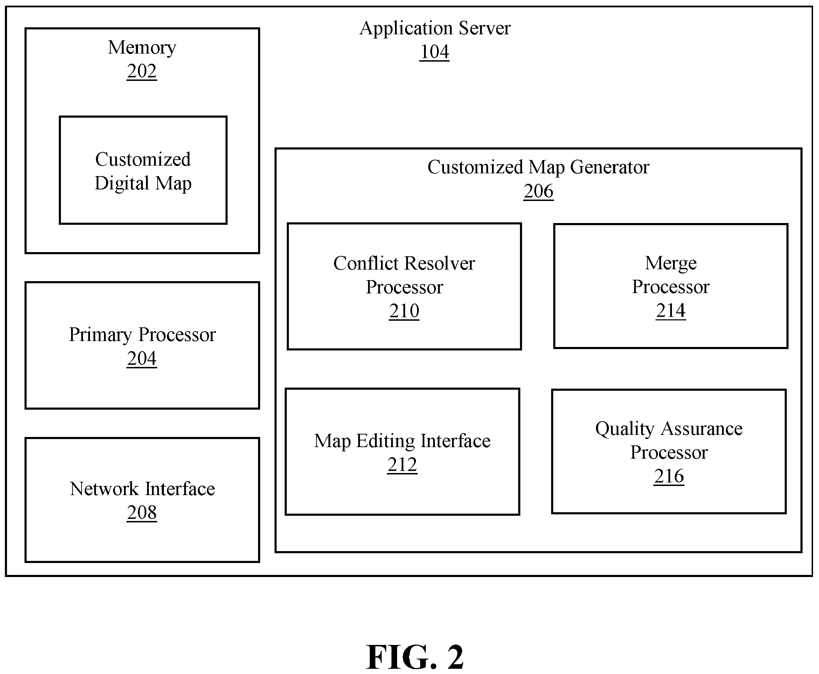

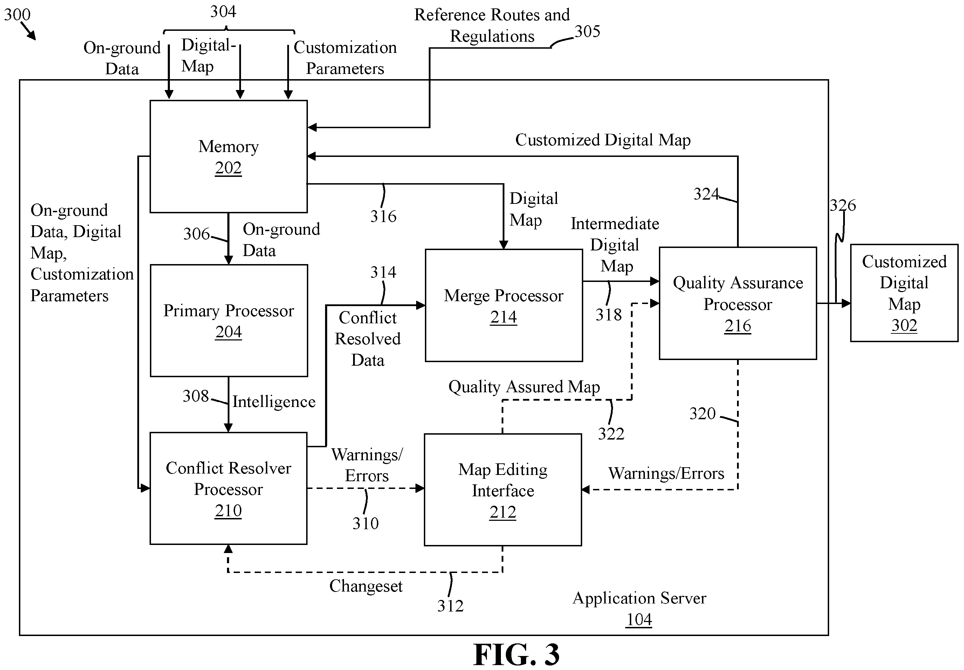

In an embodiment, the application server 104 may be further configured to communicate with the primary user device 102 via the communication network 110 to present the customized digital map to the user entity via a display of the primary user device 102. The customized digital map may have a different view depending upon an interface of the primary user device 102. In an embodiment, the primary user device 102 may be a cellphone, hence the customized digital map may be viewed in a mobile view mode. In another embodiment, the primary user device 102 may be a laptop. In such embodiment, the customized digital map may be presented in a desktop view mode. In some embodiments, the customized digital map may be stored in the database server 106 that may be accessed by the primary user device 102 to access the customized digital map. Various components of the application server 104 and their operations are described in conjunction with FIGS. 2 and 3.

FIG. 2 is a block diagram of the application server, in accordance with an exemplary embodiment of the disclosure. Referring to FIG. 2, the application server 104 may be shown to include a memory 202, a primary processor 204, a customized map generator 206, and a network interface 208. The customized map generator 206 may include a conflict resolver processor 210, a map editing interface 212, a merge processor 214, and a quality assurance processor 216.

The memory 202 may include suitable logic, circuitry, and interfaces that may be configured to store one or more instructions which when executed by one or more other components of the application server 104 cause the respective component to perform various operations for generating the customized digital map. The memory 202 may be configured to store the digital map, the one or more reference routes and regulations, the on-ground data, the customization parameters, the intelligence, and the customized digital map. The memory 202 may be accessible by the primary processor 204 and the customized map generator 206. Examples of the memory 202 may include, but are not limited to, a random-access memory (RAM), a read only memory (ROM), a removable storage drive, a hard disk drive (HDD), a flash memory, a solid-state memory, or the like. It will be apparent to a person skilled in the art that the scope of the disclosure is not limited to realizing the memory 202 in the application server 104, as described herein. In another embodiment, the memory 202 may be realized in form of a database or a cloud storage working in conjunction with the application server 104, without departing from the scope of the disclosure.

The primary processor 204 may include suitable logic, circuitry, interfaces, and/or code, executable by the circuitry, that may be configured to execute the instructions stored in the memory 202 to perform various operations for generating the customized digital map. The primary processor 204 may be configured to perform various operations associated with data collection and data processing for generation of the customized digital map. The primary processor 204 may be implemented by one or more processors, such as, but not limited to, an application-specific integrated circuit (ASIC) processor, a reduced instruction set computing (RISC) processor, a complex instruction set computing (CISC) processor, and a field-programmable gate array (FPGA) processor. The one or more processors may also correspond to central processing units (CPUs), graphics processing units (GPUs), network processing units (NPUs), digital signal processors (DSPs), or the like. It will be apparent to a person of ordinary skill in the art that the primary processor 204 may be compatible with multiple operating systems. The primary processor 204 may be configured to retrieve the on-ground data stored in the memory 202. The primary processor 204 is further configured to generate the intelligence (e.g., the one or more current routes and activities) based on the on-ground data.

The customized map generator 206 may include suitable logic, circuitry, interfaces, and/or code, executable by the circuitry, that may be configured to perform one or more operations for generating the customized digital map. The customized map generator 206 may include various components thar are dedicated to perform one or more operations for the generation of the customized digital map. In one embodiment, the customized map generator 206 may include the conflict resolver processor 210, the map editing interface 212, the merge processor 214, and the quality assurance processor 216. In other embodiments, the customized map generator 206 may include additional components or different components configured to perform one or more operations for generating the customized digital map.

The conflict resolver processor 210 may include suitable logic, circuitry, interfaces, and/or code, executable by the circuitry, that may be configured to perform conflict resolution among the digital map, the one or more reference transportation routes and regulations, and the one or more current transportation routes and activities. In some embodiments, the conflict resolver processor 210 may be configured to perform conflict resolution among the intelligence, the on-ground data, the digital map, and the set of customization parameters. In an embodiment, the conflict resolver processor 210 may be configured to apply one or more conflict resolution techniques for the conflict resolution. In one example, a conflict may arise between the intelligence and the set of customization parameters. In such example, the conflict resolver processor 210 may modify the intelligence to conform with the set of customization parameters in order to resolve the conflict. In another example, a conflict may arise between the on-ground data and the intelligence. In such example, the conflict resolver processor 210 may combine the on-ground data and the intelligence in order to resolve the conflict.

The map editing interface 212 may include suitable logic, circuitry, interfaces, and/or code, executable by the circuitry, that may be configured to perform one or more operations for generating the customized digital map. The map editing interface 212 may be accessible to the administrator via the user device 112. The map editing interface 212 may be further configured to receive one or more inputs from the administrator to resolve one or more conflicts that require human intervention. The map editing interface 212 may be further configured to receive input from the administrator to resolve one or more warnings or errors associated with the one or more QA issues of the intermediate digital map. The map editing interface 212 may provide a GUI that may be accessed by the administrator. In one embodiment, the map editing interface 212 may be further accessible on the primary user device 102 for allowing the user entity to provide the set of customization parameters and make specific changes in the customized digital map.

The merge processor 214 may include suitable logic, circuitry, interfaces, and/or code, executable by the circuitry, that may be configured to perform one or more operations for merging the conflict resolved data and the digital map to generate the customized digital map or the intermediate digital map. The merge processor 214 may be configured to apply one or more merge policies on the conflict resolved data and the digital map for a seamless merger thereof. The merge processor 214 may be further configured to output the customized digital map or the intermediate digital map. The intermediate digital map refers to an intermediate form of the customized digital map. The intermediate digital map may reflect the intelligence and other information acquired and deduced from the on-ground data, the set of customization parameters, and the digital map. The intermediate digital map may have one or more quality related issues. In other words, the intermediate digital map may be a raw and unfiltered form of the customized digital map.

The quality assurance processor 216 may include suitable logic, circuitry, interfaces, and/or code, executable by the circuitry, that may be configured to perform one or more operations for ensuring a quality of the customized digital map. The quality assurance processor 216 may be configured to receive the intermediate digital map or the customized digital map as input from the merge processor 214. The quality assurance processor 216 may be configured to apply the one or more QA constraints on the intermediate digital map or the customized digital map. In one example where the one or more QA constraints are not satisfied in the intermediate digital map or the customized digital map, one or more warnings or errors may be generated by the quality assurance processor 216. The quality assurance processor 216 may be further configured to resolve warnings or errors and generate the quality assured customized digital map as its output.

The network interface 208 may include suitable logic, circuitry, interfaces, and/or code, executable by the circuitry, that may be configured to enable the application server 104 to communicate with the primary user device 102, the database server 106, and the one or more databases, and the set of data sources. The network interface 208 may be implemented as a hardware, software, firmware, or a combination thereof. Examples of the network interface 208 may include a network interface card, a physical port, a network interface device, an antenna, a radio frequency transceiver, a wireless transceiver, an Ethernet port, a universal serial bus (USB) port, or the like.

In one embodiment, the application server 104 may further include a machine learning engine. The machine learning engine may include suitable logic, circuitry, interfaces, and/or code, executable by the circuitry, that may be configured to perform one or more operations for generating the customized digital map. The machine learning engine may be trained based on different versions of customized digital map generated in the past. The machine learning engine may be further configured to generate intelligence based on the on-ground data. The machine learning engine may perform artificial intelligence (AI) based intelligence generation from the on-ground data. In one example, the on-ground data may indicate that an airport and a metro station are connected via a first road. The metro station may have a first gate corresponding to the first road and a second gate corresponding to a second road. The machine learning engine may observe and learn a pattern that commuters from the metro station are going to the airport via the first road. However, nobody is taking the first road from the airport to reach the metro station. Therefore, the machine learning engine may deduce that the first gate is being used to exit the metro station and the second gate is being used for entering the metro station.

In an embodiment, the machine learning engine may be configured to perform AI based conflict resolution. The machine learning engine, for the conflict resolution, may learn based on feedback from the user entity or the first user input from the user device 112. In one example, the on-ground data may indicate that a courthouse and a police station are separated by a park. A road passing through the park may connect the courthouse and the police station. The intelligence may indicate that there is a road along circumference of the park that connects the courthouse and the police station. However, the intelligence may not indicate the road through the park. The application server 104 may receive feedback from the user entity or the user device 112 that the road through the park is active between 7 PM and 4 AM. Therefore, the machine learning engine may resolve the conflict based on the feedback by combining the intelligence and the on-ground data and updating the intelligence to represent the road going through the park and connecting the police station and the courthouse. The intelligence may also indicate that the road is active only between 7 PM and 4 AM

In an embodiment, the machine learning engine may be configured to perform AI based quality assurance over the intermediate digital map or the customized digital map. The machine learning engine may be trained to learn QA constraints based on one or more sample maps having an ideal quality. An accuracy of the machine learning engine may be further verified and improved based on one or more maps that have known quality issues. The trained machine learning engine may be configured to identify one or more QA issues in the intermediate digital map or the customized digital map. The trained machine learning engine may be configured to resolve the QA issues by modifying the intermediate digital map or the customized digital map as per the learnt QA constraints.

It will be apparent to a person skilled in the art that the application server 104 shown in FIG. 2 is exemplary and in other embodiments the application server 104 may include additional or different components configured to perform similar or different operations.

FIG. 3 is a diagram that illustrates an exemplary scenario for generating the customized digital map, in accordance with an exemplary embodiment of the disclosure. Referring to FIG. 3, the exemplary scenario 300 illustrates the generation of the customized digital map (hereinafter, the customized digital map 302).

Upon receiving the customized map request from the primary user device 102 for the user entity, the application server 104 may be configured to acquire the on-ground data, the digital map, and the set of customization parameters (as shown by arrows 304). The application server 104 may be configured to acquire the digital map from the one or more databases. The application server 104 may be further configured to collect the one or more reference routes and regulations (as shown by arrows 305) from the one or more databases. In some embodiments, the digital map of the geographical area may include the one or more reference routes and regulations. The application server 104 may be configured to acquire the set of customization parameters from the primary user device 102. The application server 104 may be configured to acquire the on-ground data from the set of data sources, the primary user device 102, a satellite imagery source, a street map imagery source, and/or the like. The application server 104 may be configured to store the one or more reference parameters, the digital map, the set of customization parameters, and the on-ground data in the memory 202. The on-ground data may include a layout of road network, one-ways/two-ways/freeways, footpaths, traffic restrictions, water bodies, mountains and terrains, forests, parks, residential areas, commercial areas, underground paths, and/or the like within the geographical region.

In a non-limiting example, the user entity may be an ambulance service provider. The primary user device 102 may be utilized by the ambulance service provider to communicate a customized map request to the application server 104 for obtaining a customized digital map for a city A, where one or more ambulances are deployed by the ambulance service provider. The application server 104 may receive the customized map request. Based on reception of the customized map request, the application server 104 may acquire a digital map of the city A from the one or more databases (for example, the database 108). The digital map may include a physical layout of the city A, weather conditions of the city A, road network within the city A, and/or the like. The application server 104 may further acquire on-ground data for the city A from at least one of the one or more databases, one or more satellite imagery sources, street map imagery sources, GPS of the one or more ambulances, and/or the like. The on-ground data may include satellite image, street map images and GPS data of the city A. Such data may present a current state of the physical layout, the weather, the roads of the city A, the routes, and activities being implemented in the city A. The application server 104 may further acquire set of customization parameters from the primary user device 102 of the ambulance service provider. The set of customization parameters may include one or more constraints that are to be applied while generating the customized digital map. The set of customization parameters may include grading of roads based on respective traffic conditions, indicating one-ways, two-ways, and freeways differently, distinctly marking healthcare centers, indicating dedicated wheel-chair paths, and/or the like.

The primary processor 204 may be configured to retrieve the on-ground data and the digital map stored in the memory 202 for intelligence generation (as shown by arrow 306). The primary processor 204 may be configured to process the on-ground data to determine the intelligence associated with the geographical region. The primary processor 204 may process the on-ground data to deduce information that is relevant for generating the customized digital map 302. In an example, a wildlife conservation park on outskirts of the geographical region may be irrelevant while generating the customized digital map 302 for a food delivery service. Therefore, the primary processor 204 may discard such information while generating the intelligence based on the on-ground data. In another example, the wildlife conservation park on outskirts of the geographical region may be relevant while generating the customized digital map 302 for a wildlife protection service agency. Therefore, the primary processor 204 may keep such information while generating the intelligence based on the on-ground data. In one embodiment, the primary processor 204 may be configured to apply one or more AI based techniques to deduce the intelligence from the on-ground data as described in the foregoing description of FIGS. 1 and 2.

In one embodiment, the primary processor 204 may use 80% of the on-ground data to create the intelligence. The primary processor 204 may be configured to use the remaining 20% of the on-ground data to verify the generated intelligence. The primary processor 204 may be further configured to resolve one or more conflicts identified during verification of the intelligence. Referring to the abovementioned non-limiting example, the primary processor 204 may be configured to receive the on-ground data associated with the city A. The on-ground data may indicate that a road connecting two extreme sides of the city A has a portion in the middle that is not being used by anyone. Therefore, based on the on-ground data, the primary processor 204 may determine that the road may have detour therebetween. The primary processor 204 may determine such intelligence based on 80% of the on-ground data. The intelligence may be verified based on remaining 20% of the intelligence data to check whether a path for detour exists. The intelligence is validated based on a result of the verification.

The primary processor 204 may provide the intelligence as an input to the conflict resolver processor 210 (as shown by arrow 308). The conflict resolver processor 210 may further retrieve the one or more reference routes and regulations, the on-ground data, the digital map, and the set of customization parameters from the memory 202. The conflict resolver processor 210 may be configured to determine one or more conflicts between one of "the one or more reference routes and regulations and the one or more current routes and activities", "the one or more reference routes and regulations and the digital map", and "the one or more current routes and activities and the digital map" based on analysis of the one or more reference routes and regulations, the intelligence, the on-ground data, the digital map, and the customization parameters. In some embodiments, the conflict resolver processor 210 may be configured to determine one or more conflicts between one of "the intelligence and the on-ground data", "the intelligence and the customization parameters", "the intelligence and the digital map", "the on-ground data and the customization parameters", "the on-ground data and the digital map", and "the customization parameters and the digital map". The conflict resolver processor 210 resolves the one or more conflicts based on one or more conflict resolution techniques. In one embodiment, the conflict resolver processor 210 may apply one or more AI based techniques for resolving the one or more conflicts as described in the foregoing description of FIGS. 1 and 2.

In one embodiment, a conflict may arise between the intelligence and the digital map. For example, the digital map may indicate the existence of a two-way path between first and second locations; however, the intelligence generated from the on-ground data may indicate presence of one-way path between first and second locations. Therefore, for resolving such conflict, the conflict resolver processor 210 may update digital map information to confirm with the intelligence. In one embodiment, when there is a conflict between the intelligence and the digital map, the conflict resolver processor 210 may assign higher preference to the intelligence. For example, the digital map may indicate a footpath connecting two buildings. However, based on the intelligence, the footpath might not be functional. Therefore, the conflict resolver processor 210 may prioritize the intelligence over the digital map.

In one example, a conflict may arise between the intelligence and the customization parameters. In such embodiment, the intelligence may include a footpath connecting a location A and a location B in the geographical region. The customization parameters may indicate that only paths suitable for heavy duty vehicles are to be included in the customized digital map 302. Therefore, for resolving the conflict, the conflict resolver processor 210 discard the footpath connecting the location A and the location B.

In another example, a conflict may arise between the intelligence and the digital map. In such embodiment, the intelligence may indicate a path between a first location and a second location in the geographical region. However, the digital map may indicate that the path is a bridge that may accommodate a vehicle that weighs less than 2 tons. Therefore, for resolving the conflict, the conflict resolver processor 210 may update the intelligence to indicate that the path is not suitable for heavy duty vehicles.

In one embodiment, the one or more conflicts may require human intervention to be resolved. The conflict resolver processor 210 may be configured to provide warning notifications regarding such conflicts to the map editing interface 212 (as shown by arrow 310). The map editing interface 212 may present the warning notifications to the conflict manager and enable the conflict manager to provide an input for resolution of the conflicts. The map editing interface 212 may be configured to receive one or more instructions, commands, or any other input to resolve the conflicts. In one embodiment, the map editing interface 212 may be a map editing tool available in the art. In one example the map editing interface 212 may employ Java OpenStreetMap Editor (JOSM) for resolving such conflicts. The map editing interface 212 may be configured to communicate changeset for resolving the conflicts to the conflict resolver processor 210 (as shown by arrow 312). The changeset may include one or more instructions, inputs, or commands for modifying at least one of the intelligence, the customization parameters, and/or the digital map for resolution of the conflicts.

The conflict resolver processor 210 may be configured to resolve the conflicts based on the changeset and generate the conflict resolved data. The conflict resolver processor 210 may be configured to provide the conflict resolved data as input to the merge processor 214 (as shown by arrow 314). The conflict resolved data includes the set of customization parameters and the one or more deviation factors among the intelligence, the digital map, and the one or more reference routes and regulations.

The merge processor 214 may be configured to merge the conflict resolved data and the digital map. The merge processor 214 may merge the conflict resolved data and the digital map based on the one or more merge policies. In an embodiment, the merge processor 214 may merge the conflict resolved data and the digital map based on one or more outputs of the machine learning engine. The merge processor 214 may retrieve the digital map from the memory 202 (as shown by arrow 316). The merge processor 214 modifies the digital map to reflect the set of customization parameters and the one or more deviation factors . The digital map reflecting the set of customization parameters and the one or more deviation factors is outputted by the merge processor 214 as the intermediate digital map.

The merge processor 214 may be configured to provide the intermediate digital map as input to the quality assurance processor 216 (as shown by arrow 318). The quality assurance processor 216 may be configured to analyze the intermediate digital map based on the one or more QA constraints and determine whether the intermediate digital map satisfies each QA constraint. The quality assurance processor 216 may be further configured to generate one or more warnings or errors regarding the QA constraints that are in violation in the intermediate digital map. In one example, the intermediate digital map may have two overlapping buildings. Therefore, the quality assurance processor 216 may be configured to generate one or more warnings or errors regarding the overlapped buildings in the intermediate digital map.

In an embodiment, the quality assurance processor 216 may be automatically configured to modify the intermediate digital map to satisfy the QA constraints. The quality assurance processor 216 may be configured to make changes in representation of the customized digital map 302 in order to resolve the QA issues. In one example, the quality assurance processor 216 may be configured to modify a representation of roads in order to resolve QA issues regarding overlapping of roads. In another embodiment, human intervention may be required to resolve the errors and warnings generated by the quality assurance processor 216. In such embodiment, the quality assurance processor 216 may be configured to communicate the intermediate digital map and the warnings and errors to the map editing interface 212 (as shown by arrow 320). The map editing interface 212 may be configured to receive an input from the quality manager for resolving the warning and errors. The map editing interface 212 may be configured to generate the quality assured map based on the input. The map editing interface 212 may communicate the quality assured map to the quality assurance processor 216 (as shown by arrow 322). The quality assurance processor 216 may be further configured to check the quality assured map to ensure that each QA constraint is being satisfied. In one example when the quality assured map satisfies each QA constraint, the quality assurance processor 216 may be configured to generate the customized digital map 302 for the geographical region based on the quality assured map having zero QA errors. The quality assurance processor 216 may be configured to store the customized digital map 302 in the database server 106 and the memory 202 (as shown by arrow 324). For the sake of brevity, the customized digital map 302 is shown to be stored in the memory 202. The quality assurance processor 216 may be further configured to communicate the customized digital map 302 to the primary user device 102 to present the customized digital map 302 to the user entity via the display of the primary user device 102 (as shown by arrow 326).

In an embodiment, the customized digital map 302 stored in the database server 106 is updated periodically or based on an update demand received from the primary user device 102. The primary processor 204 and the customized map generator 206 may be configured to update the customized digital map 302 to generate an updated version of the customized digital map 302. The primary processor 204 and the customized map generator 206 may update the customized digital map 302 based on an update in the one or more reference routes and regulations, the digital map, the set of customization parameters, or the on-ground data. The customized digital map 302 may be updated by incorporating changes (*i.e.,* update) and performing conflict resolution and QA checks. The updated version of the customized digital map may be again presented to the user entity via the primary user device 102. In an embodiment, the memory 202 may be configured to store different versions of the customized digital map 302.

In an embodiment, the customized digital map 302 presented to the user entity may have time varying views. For example, the customized digital map 302 presented to the user entity between 10 AM-8 PM may have different active roads as compared to the customized digital map 302 presented to the user entity between 8 PM-10 AM. Certain roads that are used by heavy duty vehicles between 8 PM - 10 AM may be disabled on the customized digital map 302 presented to a food delivery personnel; however, the same roads may be enabled on the customized digital map 302 presented to the food delivery personnel between 10 AM-8 PM. Similarly, a customized digital map presented to a heavy-duty vehicles' logistic company may have the same roads enabled between 8 PM - 10 AM and disabled between 10 AM-8 PM on their customized digital map.

In an embodiment, the application server 104 may be configured to generate different customized digital maps for different user entities, such that an update in one customized digital map is independent of update in other customized digital maps.

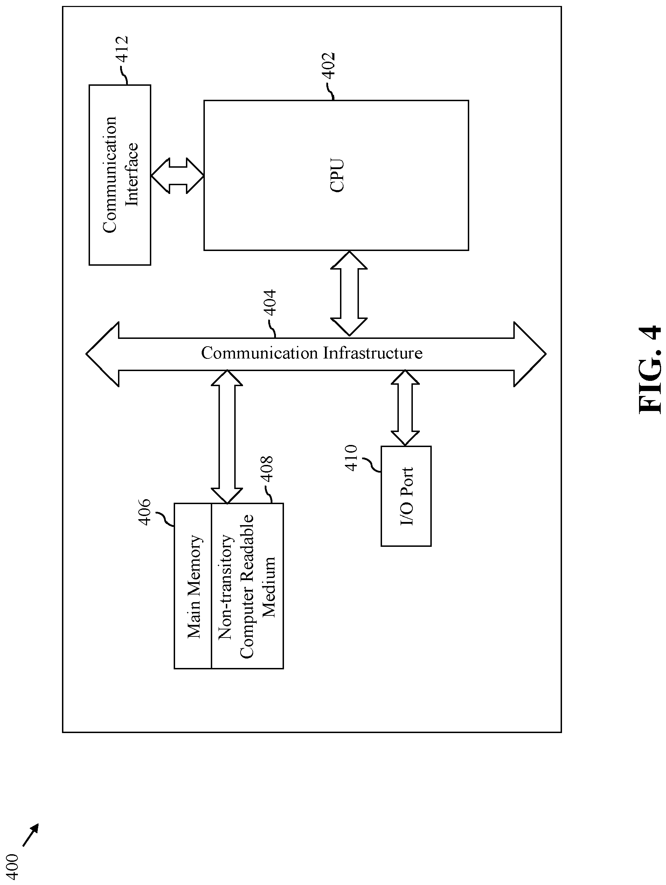

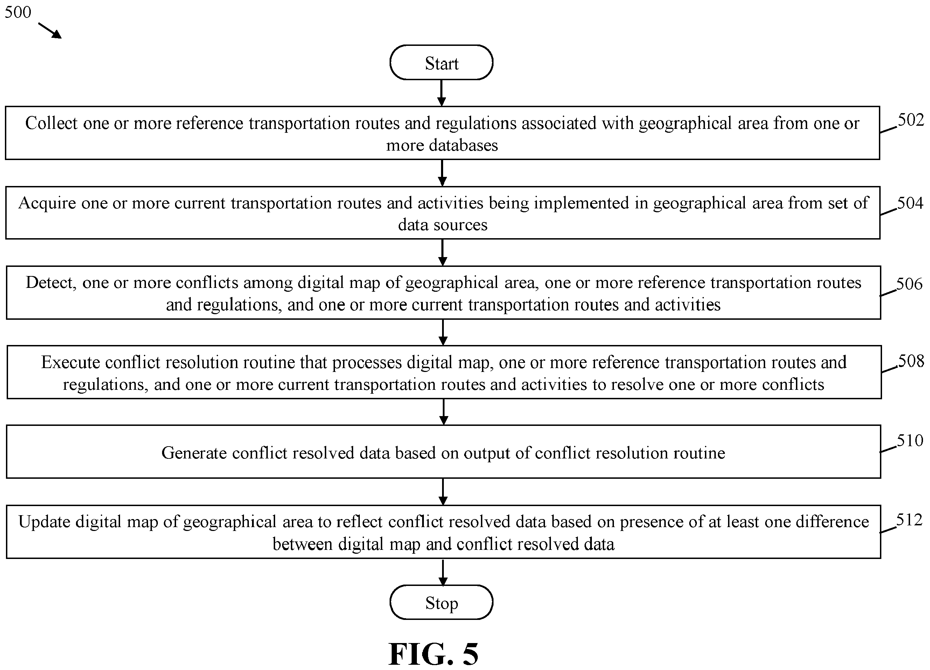

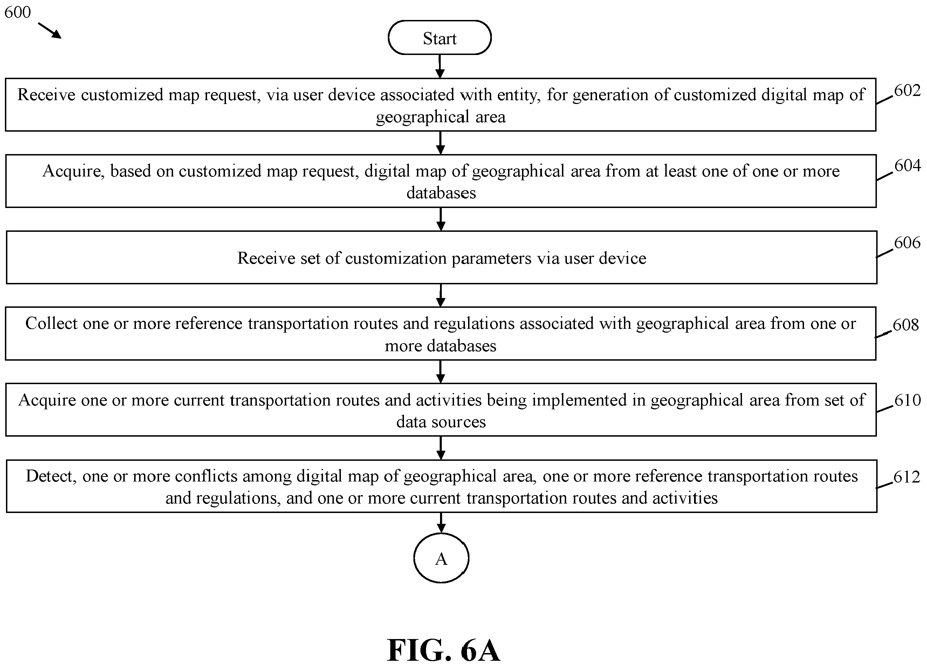

FIG. 4 is a block diagram that illustrates a system architecture of a computer system for generating the customized digital map, in accordance with an exemplary embodiment of the disclosure. An embodiment of the disclosure, or portions thereof, may be implemented as computer readable code on the computer system 400. Referring to FIG. 4, the application server 104 or the database server 106 of FIG. 1 may be implemented in the computer system 400 using hardware, software, firmware, non-transitory computer readable media having instructions stored thereon, or a combination thereof and may be implemented in one or more computer systems or other processing systems. Hardware, software, or any combination thereof may embody modules and components used to implement the methods of FIGS. 5 and 6A-6B. The computer system 400 may include a central processing unit (CPU) 402, a communication infrastructure 404, a main memory 406, a non-transitory computer-readable medium 408, an input/output (I/O) port 410, and a communication interface 412.

The central processing unit (CPU) 402 may be a special purpose or a general-purpose processing device. The CPU 402 may be a single processor or multiple processors. The CPU 402 may have one or more processor "cores". Further, the CPU 402 may be coupled to the communication infrastructure 404, such as a bus, a bridge, a message queue, the communication network 110, multi-core message-passing scheme, or the like. Examples of the main memory 406 may include RAM, ROM, and the like. The non-transitory computer-readable medium 408 may include a hard disk drive or a removable storage drive (not shown), such as a floppy disk drive, a magnetic tape drive, a compact disc, an optical disk drive, a flash memory, or the like. Further, the removable storage drive may read from and/or write to a removable storage device in a manner known in the art. In an embodiment, the removable storage unit may be a non-transitory computer readable recording media. The non-transitory computer-readable medium 408 may be configured to store thereon, computer executable instructions, which when executed by the CPU 402, cause the CPU 402 to execute operations for digital content generation and recommendation in accordance with an embodiment of the present disclosure.

The I/O port 410 may include various input and output devices that are configured to communicate with the CPU 402. Examples of the input devices may include a keyboard, a mouse, a joystick, a touchscreen, a microphone, and the like. Examples of the output devices may include a display screen, a speaker, headphones, and the like. The communication interface 412 may be configured to allow data to be transferred between the computer system 400 and various devices that are communicatively coupled to the computer system 400. Examples of the communication interface 412 may Include a modem, a network interface, *i.e.,* an Ethernet card, a communication port, and the like. Data transferred via the communication interface 412 may be signals, such as electronic, electromagnetic, optical, or other signals as will be apparent to a person skilled in the art. The signals may travel via a communications channel, such as the communication network 110, which may be configured to transmit the signals to the various devices that are communicatively coupled to the computer system 400. Examples of the communication channel may include a wired, wireless, and/or optical medium such as cable, fiber optics, a phone line, a cellular phone link, a radio frequency link, and the like. The main memory 406 and the non-transitory computer-readable medium 408 may refer to non-transitory computer readable mediums that may provide data that enables the computer system 400 to implement the methods illustrated in FIGS. 5 and 6A-6B.

FIG. 5 is a high-level flow chart that illustrates a method for generating a customized digital map, in accordance with an exemplary embodiment of the disclosure. Referring to FIG. 5, there is shown a flow chart 500 that illustrates exemplary operations 502 through 512 for generating the customized digital map 302.

At 502, the one or more reference transportation routes and regulations associated with the geographical area are collected from the one or more databases. The application server 104 may be configured to collect the one or more reference transportation routes and regulations associated with the geographical area from the one or more databases.

At 504, the one or more current transportation routes and activities being implemented in the geographical area are acquired from the set of data sources. The application server 104 may be further configured to acquire the one or more current transportation routes and activities being implemented in the geographical area from the set of data sources (e.g., the data source 109).

At 506, the one or more conflicts among the digital map of the geographical area, the one or more reference transportation routes and regulations, and the one or more current transportation routes and activities are detected. The application server 104 may be further configured to detect, the one or more conflicts among the digital map of the geographical area, the one or more reference transportation routes and regulations, and the one or more current transportation routes and activities. The one or more conflicts are indicative of at least one contradiction among at least two of the digital map, the one or more reference transportation routes and regulations, and the one or more current transportation routes and activities.

At 508, the conflict resolution routine may be executed to process the digital map, the one or more reference transportation routes and regulations, and the one or more current transportation routes and activities to resolve the one or more conflicts. The application server 104 may be further configured to execute the conflict resolution routine that processes the digital map, the one or more reference transportation routes and regulations, and the one or more current transportation routes and activities to resolve the one or more conflicts.

At 510, the conflict resolved data may be generated based on the output of the conflict resolution routine. The application server 104 may be further configured to generate the conflict resolved data based on the output of the conflict resolution routine.

At 512, the digital map of the geographical area may be updated to reflect the conflict resolved data based on presence of at least one difference between the digital map and the conflict resolved data. The application server 104 may be further configured to update the digital map of the geographical area to reflect the conflict resolved data based on presence of at least one difference between the digital map and the conflict resolved data.

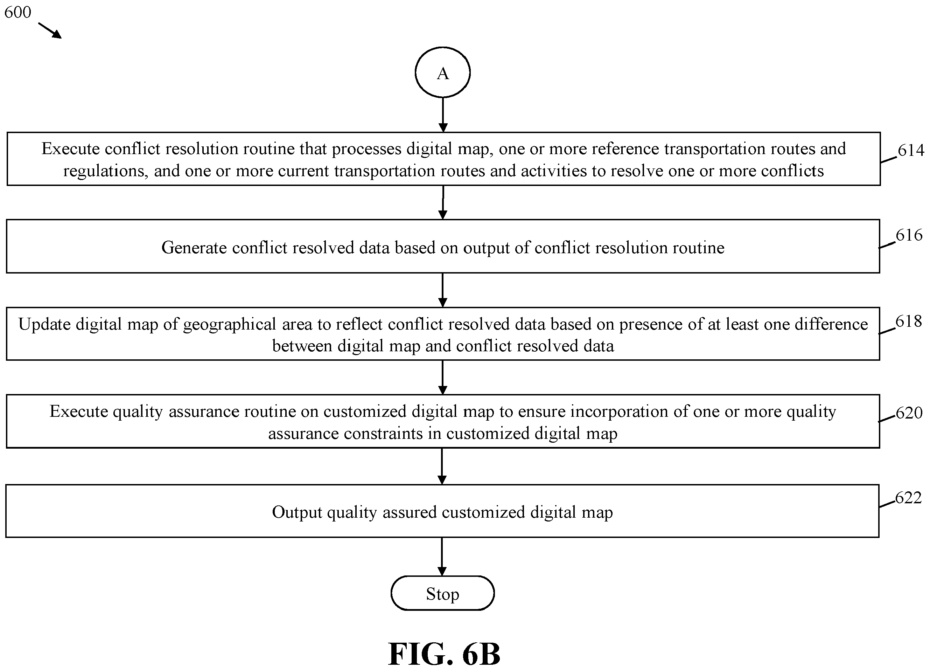

FIGS. 6A and 6B are flow charts that, collectively, illustrate a method for generating the customized digital map, in accordance with an exemplary embodiment of the disclosure. Referring to FIGS. 6A and 6B, there is shown a flow chart 600 that illustrates exemplary operations 602 through 622 for generating the customized digital map.

Referring to FIG. 6A, at 602, the customized map request may be received, via the primary user device 102 associated with the entity, for generation of the customized digital map 302 of the geographical area. The application server 104 may be configured to receive the customized map request, via the primary user device 102 associated with the entity, for generation of the customized digital map 302 of the geographical area.

At 604, the digital map of the geographical area may be acquired, based on the customized map request, from at least one of the one or more databases. The application server 104 may be configured to acquire, based on the customized map request, the digital map of the geographical area from at least one of the one or more databases.

At 606, the set of customization parameters may be received via the primary user device 102. The application server 104 may be configured to receive the set of customization parameters via the primary user device 102. Each customization parameter of the set of customization parameters corresponds to one or more custom map rules to be adhered to in the customized digital map 302.

At 608, the one or more reference transportation routes and regulations associated with the geographical area are collected from the one or more databases. The application server 104 may be configured to collect the one or more reference transportation routes and regulations associated with the geographical area from the one or more databases.

At 610, the one or more current transportation routes and activities being implemented in the geographical area are acquired from the set of data sources. The application server 104 may be further configured to acquire the one or more current transportation routes and activities being implemented in the geographical area from the set of data sources.

At 612, the one or more conflicts among the digital map of the geographical area, the one or more reference transportation routes and regulations, and the one or more current transportation routes and activities are detected. The application server 104 may be further configured to detect, the one or more conflicts among the digital map of the geographical area, the one or more reference transportation routes and regulations, and the one or more current transportation routes and activities. The one or more conflicts are indicative of at least one contradiction among at least two of the digital map, the one or more reference transportation routes and regulations, and the one or more current transportation routes and activities.

Referring now to FIG. 6B, at 614, the conflict resolution routine may be executed to process the digital map, the one or more reference transportation routes and regulations, and the one or more current transportation routes and activities to resolve the one or more conflicts. The application server 104 may be further configured to execute the conflict resolution routine that processes the digital map, the one or more reference transportation routes and regulations, and the one or more current transportation routes and activities to resolve the one or more conflicts.

At 616, the conflict resolved data may be generated based on the output of the conflict resolution routine. The application server 104 may be further configured to generate the conflict resolved data based on the output of the conflict resolution routine.

At 618, the digital map of the geographical area may be updated to reflect the conflict resolved data based on presence of at least one difference between the digital map and the conflict resolved data. The application server 104 may be further configured to update the digital map of the geographical area to reflect the conflict resolved data based on presence of at least one difference between the digital map and the conflict resolved data.

At 620, the quality assurance routine may be executed on the customized digital map 302 to ensure incorporation of one or more quality assurance constraints in the customized digital map 302. The application server 104 may be further configured to execute the quality assurance routine on the customized digital map 302 to ensure incorporation of one or more quality assurance constraints in the customized digital map 302.

At 622, the quality assured customized digital map 302 may be outputted. The application server 104 may be configured to output the quality assured customized digital map 302 of the geographical area.

In an embodiment, the customized digital map 302 may be stored in a local memory of the primary user device 102. Hence, the customized digital map 302 may be accessed via the primary user device 102 even when the primary user device 102 is not in communication with the application server 104 and/or the database server 106. The first and second user devices 103a and 103b associated with the primary user device 102 may be configured to access the customized digital map 302.

Various embodiments of the disclosure provide the application server 104 for generating customized digital map 302. The application server 104 may be configured to collect the one or more reference transportation routes and regulations associated with the geographical area from the one or more databases. The application server 104 may be further configured to acquire the one or more current transportation routes and activities being implemented in the geographical area from the set of data sources. The application server 104 may be further configured to detect, the one or more conflicts among the digital map of the geographical area, the one or more reference transportation routes and regulations, and the one or more current transportation routes and activities. The one or more conflicts are indicative of at least one contradiction among at least two of the digital map, the one or more reference transportation routes and regulations, and the one or more current transportation routes and activities. The application server 104 may be further configured to execute the conflict resolution routine that processes the digital map, the one or more reference transportation routes and regulations, and the one or more current transportation routes and activities to resolve the one or more conflicts. The application server 104 may be further configured to generate the conflict resolved data based on the output of the conflict resolution routine. The application server 104 may be further configured to update the digital map of the geographical area to reflect the conflict resolved data based on presence of at least one difference between the digital map and the conflict resolved data.

Various embodiments of the disclosure provide the non-transitory computer-readable medium 408 having stored thereon, computer executable instructions, which when executed by a computer, cause the computer to execute one or more operations for generating the customized digital map 302. The one or more operations include collecting, by the application server 104, the one or more reference transportation routes and regulations associated with the geographical area from the one or more databases (for example, the database 108). The one or more operations further include acquiring, by the application server 104, the one or more current transportation routes and activities being implemented in the geographical area from the set of data sources. The one or more operations further include detecting, by the application server 104, the one or more conflicts among the digital map of the geographical area, the one or more reference transportation routes and regulations, and the one or more current transportation routes and activities. The one or more conflicts are indicative of at least one contradiction among at least two of the digital map, the one or more reference transportation routes and regulations, and the one or more current transportation routes and activities. The one or more operations further include executing, by the application server 104, the conflict resolution routine that processes the digital map, the one or more reference transportation routes and regulations, and the one or more current transportation routes and activities to resolve the one or more conflicts. The one or more operations further include generating, by the application server 104, the conflict resolved data based on the output of the conflict resolution routine. The one or more operations further include updating, by the application server 104, the digital map of the geographical area to reflect the conflict resolved data based on presence of at least one difference between the digital map and the conflict resolved data.

The disclosed embodiments encompass numerous advantages. Exemplary advantages of the disclosed methods include, but are not limited to, providing personalized navigation to a user entity. The customized digital map 302 generated by the disclosed method provides for navigation that optimizes time and resources required for commuting within a geographical region. The customized digital map 302 further provides for accurate navigation that significantly reduces a probability of getting lost or wasting time due to unsuitable route of commute. The disclosed method provides for a simplified and seamless approach for navigation within the geographical region. Contrary to the existing open-source maps, the customized digital map 302 is generated by taking into account specific navigation needs and requirements of the user entity, thereby making the digital map more user friendly and easy for navigation. Technical improvements in the application server 104 enables the application server 104 to generate customized digital maps that have different schema for different user entities. In other words, the application server 104 enables generation of different digital maps tailored according to different use cases, different local geographic conditions, different modes of travel, different local traffic regulations, and user specific preferences. Further, the application server 104 enables an independent update of each digital map without affecting other customized digital maps.

The disclosed methods and systems are distributed in nature and hence are significantly secure. The disclosed methods and systems are AI enabled and hence provide for intelligent insights regarding navigation. The disclosed methods and systems have a modular architecture that enables a robust mechanism for navigation. The disclosed methods and systems generate the customized digital map 302 that is conflict free and hence is easy to understand and follow. The customized digital map is quality assured and therefore presents an accurate and clear representation of the geographical region. Areas of application of the disclosed methods and systems include, but are not limited to, ride hailing, food delivery, transportation services, last mile logistics, freight services, public transport systems, healthcare logistics. and/or the like.

A person of ordinary skill in the art will appreciate that embodiments and exemplary scenarios of the disclosed subject matter may be practiced with various computer system configurations, including multi-core multiprocessor systems, minicomputers, mainframe computers, computers linked or clustered with distributed functions, as well as pervasive or miniature computers that may be embedded into virtually any device. Further, the operations may be described as a sequential process, however some of the operations may in fact be performed in parallel, concurrently, and/or in a distributed environment, and with program code stored locally or remotely for access by single or multiprocessor machines. In addition, in some embodiments, the order of operations may be rearranged without departing from the scope of the disclosed subject matter.

Techniques consistent with the disclosure provide, among other features, systems and methods for generating customized digital map. While various exemplary embodiments of the disclosed systems and methods have been described above, it should be understood that they have been presented for purposes of example only, and not limitations. It is not exhaustive and does not limit the disclosure to the precise form disclosed. Modifications and variations are possible in light of the above teachings or may be acquired from practicing of the disclosure, without departing from the breadth or scope.

While various embodiments of the disclosure have been illustrated and described, it will be clear that the disclosure is not limited to these embodiments only. Numerous modifications, changes, variations, substitutions, and equivalents will be apparent to those skilled in the art, without departing from the scope of the disclosure, as described in the claims.

## Claims

1. A system for generation of a customized digital map, comprising:
an application server configured to:
collect one or more reference transportation routes and regulations associated with a geographical area from one or more databases;
acquire one or more current transportation routes and activities being implemented in the geographical area from a set of data sources;
detect, one or more conflicts among a digital map of the geographical area, the one or more reference transportation routes and regulations, and the one or more current transportation routes and activities, wherein the one or more conflicts are indicative of at least one contradiction among at least two of the digital map, the one or more reference transportation routes and regulations, and the one or more current transportation routes and activities;
execute a conflict resolution routine that processes the digital map, the one or more reference transportation routes and regulations, and the one or more current transportation routes and activities to resolve the one or more conflicts;
generate conflict resolved data based on an output of the conflict resolution routine; and
update the digital map of the geographical area to reflect the conflict resolved data based on presence of at least one difference between the digital map and the conflict resolved data.

2. The system of claim 1, wherein the application server is further configured to:
receive a customized map request, via a user device associated with an entity, for generation of the customized digital map of the geographical area; and
acquire, based on the customized map request, the digital map of the geographical area from at least one of the one or more databases.

3. The system of claim 2, wherein the application server is further configured to receive a set of customization parameters via the user device, and wherein each customization parameter of the set of customization parameters corresponds to one or more custom map rules to be adhered to in the customized digital map.

4. The system of claim 1, wherein the conflict resolution routine resolves the one or more conflicts based on one of:
a priority allocated to: the digital map, the one or more reference transportation routes and regulations, and the one or more current transportation routes and activities; and
a recency factor of: the digital map, the one or more reference transportation routes and regulations, and the one or more current transportation routes and activities.

5. The system of claim 1, wherein the application server is further configured to execute a quality assurance routine on the customized digital map to ensure incorporation of one or more quality assurance constraints in the customized digital map.

6. The system of claim 3, wherein the conflict resolved data includes the set of customization parameters and one or more deviation factors among the digital map, the one or more reference transportation routes and regulations, and the one or more current transportation routes and activities.

7. The system of claim 1, wherein the application server is further configured to merge the conflict resolved data with the digital map to update the digital map.

8. The system of claim 5, wherein the application server is further configured to:
detect, based on the execution of the quality assurance routine, one or more quality issues associated with the customized digital map; and
communicate a warning notification based on the detected one or more quality issues to a user device associated with an administrator of the system.

9. The system of claim 8, wherein the application server is further configured to receive a user input via the user device for resolution of the one or more quality issues.

10. The system of claim 9, wherein the application server is further configured to update the quality assurance routine based on the resolution of the one or more quality issues in accordance with the received user input.

11. The system of claim 1, wherein the application server is further configured to:
communicate a warning notification with respect to at least one conflict of the one or more conflicts that remains unresolved after execution of the conflict resolution routine to a user device associated with an administrator of the system;
receive a user input via the user device for resolution of the at least one conflict of the one or more conflicts; and
resolve the at least one conflict of the one or more conflicts based on the received user input.

12. The system of claim 11, wherein the application server is further configured to update the conflict resolution routine based on the resolution of the at least one conflict of the one or more conflicts in accordance with the received user input.

13. The system of claim 1, wherein the one or more databases include at least one of one or more government databases and one or more open-source navigation map sources, for the geographical area.

14. The system of claim 1, wherein the set of data sources include at least one of street view maps of the geographical area, one or more sensors deployed in the geographical area, and one or more vehicles travelling via the geographical area.

15. A method for generation of a customized digital map, comprising:
collecting, by an application server, one or more reference transportation routes and regulations associated with a geographical area from one or more databases;
acquiring, by the application server, one or more current transportation routes and activities being implemented in the geographical area from a set of data sources;
detecting, by the application server, one or more conflicts among a digital map of the geographical area, the one or more reference transportation routes and regulations, and the one or more current transportation routes and activities, wherein the one or more conflicts are indicative of at least one contradiction among at least two of the digital map, the one or more reference transportation routes and regulations, and the one or more current transportation routes and activities;
executing, by the application server, a conflict resolution routine that processes the digital map, the one or more reference transportation routes and regulations, and the one or more current transportation routes and activities to resolve the one or more conflicts;
generating, by the application server, conflict resolved data based on an output of the conflict resolution routine; and
updating, by the application server, the digital map of the geographical area to reflect the conflict resolved data based on presence of at least one difference between the digital map and the conflict resolved data.
